# EUROPEAN PATENT APPLICATION

(11) **EP 2 716 664 A1**
(43) Date of publication of application: **09.04.2014**
(21) Application number: 12790025.6
(22) Date of filing: 25.04.2012
(51) Int. Cl.: C08F 220/12, C08F 220/06, C08F 220/28

(54) **(METH)ACRYLIC ACID-BASED COPOLYMER**

(30) Priority: 24.05.2011 JP 2011116096
(71) Applicant: Sumitomo Seika Chemicals Co., Ltd., Kako-gun, Hyogo 675-0145 (JP)
(72) Inventor: YAMAGUCHI, Hirofumi, Himeji-shi Hyogo 672-8076 (JP); MORIMITSU, Yuichiro, Himeji-shi Hyogo 672-8076 (JP); NAKATSUKA, Akio, Himeji-shi Hyogo 672-8076 (JP)
(74) Representative: Nicholls, Kathryn Margaret
(86) International application number: PCT/JP2012/061088
(87) International publication number: WO 2012/160933

(57) **Abstract**

The present invention provides an HASE polymer which produces a high thickening effect in a small amount at low costs. More specifically, the present invention provides a (meth) acrylic acid-based copolymer obtainable by polymerizing (meth) acrylic acid, an alkyl (meth) acrylate with an alkyl group of having 1 to 4 carbon atoms, and a (polyoxyethylene stearyl ether) ester of (meth)acrylic acid.

## Description

### Technical Field

The present invention relates to a (meth)acrylic acid-based copolymer.

### Background Art

Alkali swellable emulsion polymer (hereinafter abbreviated to ASE polymer in some cases) is a polymer used to heighten the viscosity of a solvent such as water. ASE polymer is usually a copolymer made from an acidic vinyl monomer and a nonionic vinyl monomer, and is first prepared in the form of an aqueous polymer dispersion solution having a low viscosity (for example, 100 mPa·s or less) at a low pH (for example, 4.5 or less). Next, this solution is thickened by neutralization, and then used, for example, for the purpose of rheological modification of a surfactant-containing product, such as a shampoo or a body wash. However, ASE polymer is relatively low in viscosity (for example, an aqueous solution containing 1 mass% of the polymer has a viscosity of 10, 000 mPa·s or less); thus, the amount of ASE-polymer required for giving a desired viscosity to the product becomes very large so that an economical disadvantage may be caused.

Known is hydrophobically modified alkali swellable emulsion polymer (hereinafter abbreviated to HASE polymer in some cases). This polymer is a polymer usable to heighten a viscosity of a solution such as water in the same manner as ASE polymer described above. HASE polymer is usually a copolymer made from an acidic vinyl monomer, a nonionic vinyl monomer, and a monomer having a hydrophobic group, and is different from ASE polymer in that this monomer having a hydrophobic group is copolymerized with other monomers. HASE polymer is prepared in the form of an aqueous polymer dispersion liquid having a low viscosity (for example, 100 mPa·s or less) at a low pH (for example, 4.5 or less). When this liquid is neutralized, hydrophobic group-association is caused therein due to the monomer having a hydrophobic group. Thus, it is known that HASE polymer usually comes to have a higher viscosity than ASE polymer. As an example thereof, an alkylacrylamide-containing emulsion copolymer is disclosed (see Patent Literature 1).

### Citation List

### Patent Literature

PTL 1: JP 59-089313 A1

### Disclosure of Invention

### Problem to be solved by the Invention

However, about the HASE polymer described in Patent Literature 1, the thickening effect is insufficient. Thus, an HASE polymer having a higher thickening effect is desired.

Moreover, HASE polymer is generally expensive. Thus, it is not economically preferred to increase the used amount thereof. Consequently, HASE polymer has been used in combination with another rheological modifier (thickener). However, the use of such plural materials is undesirable for production process on commercial scale. In light of such a background, an HASE polymer has been desired which produces a high thickening effect in a small used amount thereof. However, no HASE polymer which satisfies this desire has been reported.

An object of the present invention is to provide an HASE polymer which has a higher thickening effect in a small amount at low costs.

### Means for solving the problem

The (meth)acrylic acid-based copolymer according to the present invention is a (meth)acrylic acid-based copolymer obtainable by polymerizing (meth)acrylic acid, an alkyl (meth) acrylate with an alkyl group having 1 to 4 carbon atoms, and a (polyoxyethylene stearyl ether) ester of (meth)acrylic acid that is represented by the following general formula (I):
[Chem. 1]

CH₂=CRC(O)-(OCH₂CH₂)ₙ-OC₁₈H₃₇ (I)

wherein R represents a hydrogen atom or a methyl group, and n is an integer of 2 to 60,
in which an aqueous solution containing 1 mass% of the (meth) acrylic acid-based copolymer has a viscosity of 1, 000 to 100,000 mPa·s at 25°C when this solution is adjusted into a pH of 7.5 with a 6 mass%-aqueous solution of sodium hydroxide, and
in which an aqueous solution containing 1 mass% of the (meth)acrylic acid-based copolymer and 5.3 mass% of sodium polyoxyethylene (2) lauryl sulfate has a viscosity of 500 to 50,000 mPa·s at 25°C when this solution is adjusted into a pH of 7 to 7.5 with a 6 mass% of sodium hydroxide.

### Effects of the Invention

The (meth)acrylic acid-based copolymer according to the present invention can be inexpensively produced, and can produce a higher thickening effect in a small amount. Mode for Carrying Out the Invention

The (meth)acrylic acid-based copolymer according to the present invention is a (meth)acrylic acid-based copolymer obtainable by polymerizing a (meth)acrylic acid, an alkyl (meth)acrylate, and (polyoxyethylene stearyl ether) ester of (meth)acrylic acid. In the present invention, the word "(meth)acrylic" denotes "acrylic" and "methacrylic"; and the word "(meth)acrylate" denotes "acrylate" and "methacrylate".

The alkyl (meth)acrylate is an alkyl (meth) acrylate with an alkyl group having 1 to 4 carbon atoms. Specific examples thereof include methyl (meth)acrylate, ethyl (meth)acrylate, n-propyl (meth)acrylate, isopropyl (meth)acrylate, n-butyl (meth)acrylate, sec-butyl (meth)acrylate, isobutyl (meth)acrylate, andtert-butyl (meth)acrylate. Of these alkyl (meth)acrylates, ethyl (meth)acrylate, n-butyl (meth)acrylate, or tert-butyl (meth)acrylate is preferably used from the viewpoint of the viscosity of a neutralized aqueous solution of the resultant (meth)acrylic acid-based copolymer, and easy availability thereof at low coats. These alkyl (meth)acrylates may be used alone or in combination of two or more species thereof.

The used amount of the alkyl (meth) acrylate is preferably from 70 to 900 parts, more preferably from 80 to 400 parts, even more preferably from 100 to 200 parts by mass for 100 parts by mass of (meth)acrylic acid used. When the used amount of the alkyl (meth)acrylate is less than 70 parts by mass, the (meth) acrylic acid-based copolymer produced when the starting monomers are caused to react with each other in water is too high in hydrophilicity, so that unfavorably the resultant may not be obtained in the form of an aqueous dispersion with ease. When the used amount of the alkyl (meth)acrylate is more than 900 parts by mass, a neutralized aqueous solution of the resultant (meth)acrylic acid-based copolymer may be unfavorably lowered in viscosity.

The (polyoxyethylene stearyl ether) ester of (meth) acrylic acid is a compound represented by the following general formula (I):
[Chem. 2]

CH₂=CRC(O)-(OCH₂CH₂)ₙ-OC₁₈H₃₇ (I)

wherein R is a hydrogen atom or a methyl group, and n is an integer of 2 to 60.

Out of species of the (polyoxyethylene stearyl ether) ester of (meth) acrylic acid, compounds wherein n in the general formula is from 10 to 60 are preferred upon comparing the species with each other about their viscosity properties, which will be detailed later, based on the difference in n therebetween when the individual (polyoxyethylene stearyl ether) ester species of (meth)acrylic acid are used in the same amount to prepare neutralized aqueous solution using resultant (meth)acrylic acid-based copolymer. Compounds wherein n in the general formula is from 20 to 40 are more preferred. The (polyoxyethylene stearyl ether) ester of (meth)acrylic acids may be used alone or in combination of two or more species thereof.

The used amount of the (polyoxyethylene stearyl ether) ester of (meth) acrylic acid is preferably from 2 to 26 parts, more preferably from 5 to 20 parts, even more preferably from 7 to 18 parts by mass for 100 parts by mass of the total of the (meth) acrylic acid and the alkyl (meth) acrylate used. When the used amount of the (polyoxyethylene stearyl ether) ester of (meth) acrylic acid is less than 2 parts by mass, a neutralized aqueous solution of the resultant (meth)acrylic acid-based copolymer may be unfavorably lowered in viscosity. When the used amount of the (polyoxyethylene stearyl ether) ester of (meth)acrylic acid is more than 26 parts by mass, the effect (of increasing the viscosity) matched with the used amount unfavorably may not be obtained.

The (meth)acrylic acid-based copolymer according to the present invention can be produced by, for example, a polymerization method, such as an emulsion polymerization, suspension polymerization, or solution polymerization method. In the present specification, a description is made in detail about a method for producing the copolymer by an emulsion polymerization method.

The emulsion polymerization method may be a method of polymerizing (meth)acrylic acid, an alkyl (meth)acrylate, and a (polyoxyethylene stearyl ether) ester of (meth)acrylic acid in water containing a surfactant in the presence of a radical polymerization initiator.

Reaction for the polymerization is conducted in water. The used amount of water is preferably from 100 to 900 parts, more preferably from 120 to 600 parts, even more preferably from 150 to 300 parts by mass for 100 parts by mass of the total of (meth)acrylic acid, the alkyl (meth)acrylate, and the (polyoxyethylene stearyl ether) ester of (meth)acrylic acid. When the used amount of water is less than 100 parts by mass, the (meth)acrylic acid-based copolymer is not dispersed to become a bulky product, so that the resultant unfavorably may not be obtained in an emulsion form. When the used amount of water is more than 900 parts by mass, the (meth)acrylic acid-based copolymer is deteriorated in productivity so that economical inefficiency may be caused.

The above-mentioned surfactant is not particularly limited, and may be any one of ionic surfactants of anionic, cationic and amphoteric and nonionic surfactants. Of these surfactants, anionic and nonionic surfactants are preferred from the viewpoints of availability at low costs and safety.

Examples of the anionic surfactants include fatty acid soaps such as sodium laurate, and sodium palmitate; higher alkyl sulfate salts such as sodium lauryl sulfate, and potassium lauryl sulfate; alkyl ether sulfate salts such as polyoxyethylene-triethanolamine lauryl sulfate, and sodium polyoxyethylene-lauryl sulfate; N-acylsarcosines such as lauroylsarcosine sodium; higher fatty acid amide sulfonate salts such as N-myristoyl-N-methyltaurine sodium, coconut oil fatty acid methyltaurine sodium, and laurylmethyltaurine sodium; phosphate salts such as sodium polyoxyethylene-oleyl ether phosphate, and polyoxyethylene-stearyl ether phosphate; sulfosuccinate salts such as sodium di-2-ethylhexylsulfosuccinate, sodium monolauroylmonoethanolamide polyoxyethylene sulfosuccinate, and sodium lauryl polypropylene glycol sulfosuccinate; alkylbenzenesulfonate salts such as sodium linear dodecylbenzenesulfonate, triethanolamine linear dodecylbenzenesulfonate, and linear dodecylbenzenesulfonic acid; higher fatty acid ester sulfate salts such as sodium hydrogenated coconut oil fatty acid glycerin sulfate; N-acyl glutamate salts such as monosodium N-lauroylglutamate, disodium N-stearoylglutamate, and monosodium N-myristoyl-L-glutamate; polyoxyethylene-alkyl ether carboxylic acids; polyoxyethylene-alkyl allyl ether carboxylate salts; α-olefinsulfonate salts; higher fatty acid ester sulfonate salts; secondary alcohol sulfate salts; higher fatty acid alkylolamide sulfate salts; sodium lauroylmonoethanolamide succinate; ditriethanolamine N-palmitoyl aspartate; and sodium casein. Of these anionic surfactants, sodium polyoxyethylene-laurylsulfate, and sodium lauryl sulfate are preferred from the viewpoints of the solubility and washability in the use thereof.

The nonionic surfactants are classified into, for example, lipophilic nonionic surfactants and hydrophilic nonionic surfactants. Examples of the lipophilic nonionic surfactants include sorbitan fatty acid esters such as sorbitan monooleate, sorbitan monoisostearate, sorbitan monolaurate, sorbitan monopalmitate, sorbitan monostearate, sorbitan sesquioleate, sorbitan trioleate, diglycerol sorbitan penta-2-ethylhexylate, and diglycerol sorbitan tetra-2-ethylhexylate; glycerin polyglycerin fatty acids such as mono-cotton-oil-fatty-acid glycerin, glycerin monoerucate, glycerin sesquioleate, glycerin monostearate, glycerin α,α'-oleate pyroglutamate, and glycerin monostearate malic acid; propylene glycol fatty acid esters such as propylene glycol monostearate; hydrogenated castor oil derivatives; and glycerin alkyl ethers. Examples of the hydrophilic nonionic surfactants include polyoxyethylene-sorbitan fatty acid esters, such as polyoxyethylene-sorbitan monooleate, polyoxyethylene-sorbitan monostearate, polyoxyethylene-sorbitan monooleate, and polyoxyethylene-sorbitan tetraoleate; polyoxyethylene sorbitol fatty acid esters such as polyoxyethylene sorbitol monolaurate, polyoxyethylene sorbitol monooleate, polyoxyethylene sorbitol pentaoleate, and polyoxyethylene sorbitol monostearate; polyoxyethylene glycerin fatty acid esters such as polyoxyethylene-monooleate such as polyoxyethylene-glycerin monostearate, polyoxyethylene-glycerin monoisostearate, and polyoxyethylene-glycerin triisostearate; polyoxyethylene-fatty acid esters such as polyoxyethylene-distearate, polyoxyethylene-monodioleate, and ethylene glycol distearate; polyoxyethylene-alkyl ethers such as polyoxyethylene-lauryl ether, polyoxyethylene-oleyl ether, polyoxyethylene-stearyl ether, polyoxyethylene-behenyl ether, polyoxyethylene-2-octyldodecyl ether, and polyoxyethylene-cholestanol ether; polyoxyethylene/polyoxypropylene copolymers; polyoxyethylene/polyoxypropylene-alkyl ethers such as polyoxyethylene/polyoxypropylene-cetyl ether, polyoxyethylene/polyoxypropylene-2-decyl tetradecyl ether, polyoxyethylene/polyoxypropylene-monobutyl ether, polyoxyethylene/polyoxypropylene-hydrogenated lanoline, and polyoxyethylene/polyoxypropylene-glycerin ether; tetrapolyoxyethylene/tetrapolyoxypropylene-ethylenediamine condensates such as tetrapolyoxyethylene/tetrapolyoxypropylene-ethylenediamine; polyoxyethylene-castor oil hydrogenated castor oil derivatives such as polyoxyethylene-castor oil, polyoxyethylene-hydrogenated castor oil, polyoxyethylene-hydrogenated castor oil monoisostearate, polyoxyethylene-hydrogenated castor oil triisostearate, polyoxyethylene-hydrogenated castor oil monopyroglutamic acid monoisostearic acid diester, and polyoxyethylene-hydrogenated castor oil maleic acid; polyoxyethylene-beeswax/lanolin derivatives such as polyoxyethylene-sorbitol beeswax; alkanolamides such as coconut oil fatty acid diethanolamide, lauric acid monoethanolamide, and fatty acid isopropanolamide; polyoxyethylene-propylene glycol fatty acid esters; polyoxyethylene-alkylamines; polyoxyethylene-fatty acid amides; saccharose fatty acid esters; alkylethoxydimethylamine oxides; and trioleyl phosphate.

These surfactants may be used alone or in combination of two or more species thereof.

The used amount of the surfactant is preferably from 0.1 to 10 parts, more preferably from 0.3 to 3 parts, even more preferably from 0.5 to 2 parts by mass for 100 parts by mass of water used. When the used amount of the surfactant is less than 0.1 part by mass, (meth)acrylic acid, the alkyl (meth)acrylate and the (polyoxyethylene stearyl ether) ester of (meth) acrylic acid, which are each a monomer, are not evenly emulsified into water when polymerized. As a result, the polymerization advances unevenly so that the resultant (meth) acrylic acid-based copolymer does not exhibit a desired viscosity property; or the produced (meth)acrylic acid-based copolymer is not dispersed, whereby the copolymer becomes a bulky product so that a desired product may not be easily produced. When the used amount of the surfactant is more than 10 parts by mass, the emulsifying effect matched with the used amount is not obtained so that an economical disadvantage is caused.

The above-mentioned radical polymerization initiator is not particularly limited. Examples thereof include persulfate compounds such as ammonium persulfate, potassium persulfate, and sodium persulfate; peroxides such as hydrogen peroxide, benzoyl peroxide, acetyl peroxide, and lauryl peroxide; organic hydroperoxides such as cumene hydroperoxide, and tert-butyl hydroperoxide; organic peracids such as peracetic acid, and perbenzoic acid; and azo type radical polymerization initiators such as 2,2'-azobisisobutyronitrile, 2,2'-azobis(2-(4,5-dihydroimidazolyl)propane, 2,2'-azobis(2-methylpropionamidine)dihydrochloride, and 4,4'-azobis(4-cyanovaleric acid). Of these radical polymerization initiators, ammonium persulfate, potassium persulfate, and sodium persulfate are preferably used from the viewpoint of easy handleability. These radical polymerization initiators may be used alone or in combination of two or more species thereof.

The used amount of the radical polymerization initiator is preferably from 0.01 to 1 part, more preferably from 0.015 to 0.5 parts, even more preferably from 0.02 to 0.2 parts by mass for 100 parts by mass of the total of (meth) acrylic acid, the alkyl (meth)acrylate, and the (polyoxyethylene stearyl ether) ester of (meth)acrylic acid. When the used amount of the radical polymerization initiator is less than 0.01 parts by mass, much time is required for the polymerization reaction so that an economical disadvantage is caused. Additionally, the polymerization reaction may not be completed. When the used amount of the radical polymerization initiator is more than 1 part by mass, the polymerization reaction rate becomes very large so that the polymerization reaction unfavorably may not be controllable.

At the time of the polymerization reaction, the reaction temperature is preferably from 30 to 95°C, more preferably from 70 to 90°C, even more preferably from 75 to 90°C. When the reaction temperature is lower than 30°C, much time is required for the polymerization reaction so that an economical disadvantage is caused. Additionally, the polymerization reaction may not be completed. When the reaction temperature is higher than 95°C, the temperature is close to the boiling point of water, which is a medium for the polymerization, so that polymerization heat is not easily removed. Thus, the polymerization reaction unfavorably may not be controllable. The polymerization reaction period cannot be decided without reservation by effect of the reaction temperature and other factors. It is usually preferred to set the period into the range of 0.5 to 5 hours.

About the (meth) acrylic acid-based copolymer according to the present invention, the polymerization reaction thereof can be conducted, when the copolymer is produced, in the presence of a crosslinking agent, a chain transfer agent, and others in order to adjust the molecular weight of the (meth)acrylic acid-based copolymer and adjust rheological properties of an aqueous solution in which the (meth)acrylic acid-based copolymer is used.

The crosslinking agent is not particularly limited, and is preferably a compound having two or more ethylenically unsaturated groups. Specific examples of the crosslinking agent include (meth)acrylic acid esters each obtained by subjecting a polyol to di-substitution or higher substitution; allyl ethers each obtained by subjecting a polyol to di-substitution or higher substitution; and diallyl phthalate, triallyl phosphate, allyl methacrylate, tetraallyloxyethane, triallyl cyanurate, divinyl adipate, vinyl crotonate, 1,5-hexadiene, and divinylbenzene. Examples of the polyols include ethylene glycol, propylene glycol, polyoxyethylene glycol, polyoxypropylene glycol, glycerin, polyglycerin, trimethylolpropane, pentaerythritol, saccharose, and sorbitol. Of these crosslinking agents, pentaerythritol tetraallyl ether, tetraallyloxyethane, triallyl phosphate, polyallylsaccharose, trimethylolpropane triacrylate, and trimethylolpropane trimethacrylate are preferably used from the viewpoint of the easiness of the adjustment of the viscosity of a neutralized viscous liquid using the resultant (meth)acrylic acid-based copolymer. These crosslinking agents may be used alone or in combination of two or more species thereof.

The used amount of the crosslinking agent is preferably from 0.01 to 2 parts, more preferably from 0.05 to 1.5 parts, even more preferably from 0.1 to 1 part by mass for 100 parts by mass of the total of (meth)acrylic acid, the alkyl (meth)acrylate, and the (polyoxyethylene stearyl ether) ester of (meth) acrylic acid. When the used amount of the crosslinking agent is less than 0.01 parts by mass, physical properties of the copolymer are not changed by the addition of the crosslinking agent so that the addition may not give any substantial significance. When the used amount of the crosslinking agent is more than 2 parts by mass, an advantageous effect matched with the used amount may not be produced.

The chain transfer agent is not particularly limited, and examples thereof include ethanethiol, propanethiol, dodecanethiol, thioglycolic acid, thiomalic acid, dimethyl dithiocarbamic acid or any salt thereof, diethyl dithiocarbamic acid or any salt thereof, L-cysteine or any salt thereof, 3-carboxypropanethiol, isopropanol, and sodium hypophosphite.

The used amount of the chain transfer agent is preferably from 0.01 to 2 parts, more preferably from 0.05 to 1.5 parts, even more preferably from 0.1 to 1 part by mass for 100 parts by mass of (meth)acrylic acid, the alkyl (meth)acrylate, and the (polyoxyethylene stearyl ether) ester of (meth) acrylic acid. When the used amount of the chain transfer agent is less than 0.01 parts by mass, physical properties of the copolymer are not changed by the addition of the chain transfer agent so that the addition may not give any substantial significance. When the used amount of the chain transfer agent is more than 2 parts by mass, an advantageous effect matched with the used amount may not be produced.

As described above, the (meth)acrylic acid-based copolymer according to the present invention is obtainable.

About the (meth) acrylic acid-based copolymer according to the present invention, a viscosity of an aqueous solution containing 1 mass% of the (meth)acrylic acid-based copolymer at 25°C when this solution is adjusted into a pH of 7.5 with a 6 mass%-aqueous solution of sodium hydroxide (hereinafter, referred to as Viscosity A) is 1,000 to 100, 000 mPa·s, preferably 10, 000 to 70, 000 mPa·s, more preferably 15,000 to 50,000 mPa·s. When this viscosity is less than 1,000 mPa·s, the amount of the copolymer that is required for causing a system to have a target viscosity becomes large so that an economical disadvantage is caused. When this viscosity is more than 100,000 mPa·s, the copolymer becomes high in viscosity not to be easily handled. Thus, a disadvantage is caused when the copolymer is industrially used.

The viscosity (of a measuring sample) is a value obtained by allowing the measuring sample to stand still in a thermostat set to a temperature of 25°C for 2 hours, and then measuring the sample at the same temperature, using a BH type rotary viscometer. Specifically, the viscosity is measured by a method that will be described later.

About the (meth) acrylic acid-based copolymer according to the present invention, a viscosity of a solution containing 1 mass% of the (meth) acrylic acid-based copolymer and 5. 3 mass% of sodium polyoxyethylene (2) laurylsulfate at 25°C when this solution is adjusted into a pH of 7 to 7.5 with a 6 mass% of sodium hydroxide (hereinafter, referred to as Viscosity B) is 500 to 50,000 mPa·s, preferably 1,000 to 30,000 mPa·s, more preferably 5,000 to 20,000. When this viscosity is less than 500 mPa·s, the amount of the copolymer that is required for causing a system to have a target viscosity becomes large so that an economical disadvantage is caused. When this viscosity is more than 50,000 mPa·s, the copolymer becomes high in viscosity not to be easily handled. Thus, a disadvantage is caused when the copolymer is industrially used.

The proportion of a viscosity reduction of Viscosity B to Viscosity A (= (Viscosity A - Viscosity B) /Viscosity A x 100) is preferably 80% or less, more preferably 70% or less. When this viscosity reduction proportion is 80% or less, in the use of the copolymer for a product such as a shampoo the product can easily be adjusted into a desired viscosity.

Each of the above-mentioned viscosities can be adjusted, at the time of polymerization, by controlling the surfactant, the composition of the monomers, the polymerization initiator, and the reaction temperature. More specifically, a (meth)acrylic acid-based copolymer satisfying the requirements about the individual viscosities can be prepared by adjusting the reaction temperature, the used amount of the surfactant, the used amount of the polymerization initiator, and the balance between the individual monomers, referring to tendencies described below.

When the reaction temperature for the polymerization reaction is made low, the resultant (meth)acrylic acid-based copolymer tends to be low in Viscosity A and low in Viscosity B. When the reaction temperature is made high, the resultant (meth)acrylic acid-based copolymer tends to be high in Viscosity A and high in Viscosity B.

When the amount of the surfactant used in the polymerization reaction according to emulsion is made low, the resultant (meth)acrylic acid-based copolymer tends to be low in Viscosity A and low in Viscosity B. When the amount of the surfactant is made high, the resultant (meth)acrylic acid-based copolymer tends to be high in Viscosity A and high in Viscosity B.

When the proportion of (meth) acrylic acid contained in the monomer mixture is made low, where the monomer mixture contains (meth)acrylic acid, alkyl (meth)acrylate, and the (polyoxyethylene stearyl ether) ester of (meth)acrylic acid, the resultant (meth)acrylic acid-based copolymer tends to be low in Viscosity A and low in Viscosity B. When the amount of (meth) acrylic acid contained in the monomer mixture is made high, Viscosity A tends to be high and Viscosity B tends to be high.

When the proportion of the alkyl (meth) acrylate contained in the monomer mixture is made low, where the monomer mixture contains (meth)acrylic acid, alkyl (meth)acrylate, and the (polyoxyethylene stearyl ether) ester of (meth)acrylic acid, the resultant (meth)acrylic acid-based copolymer tends to be high in Viscosity A and high in Viscosity B. When the amount of the alkyl (meth)acrylate contained in the monomer mixture is made high, the resultant (meth) acrylic acid-based copolymer tends to be low in Viscosity A and low in Viscosity B.

When the proportion of (polyoxyethylene stearyl ether) ester of (meth)acrylic acid contained in the monomer mixture is made low, where the monomer mixture contains (meth) acrylic acid, alkyl (meth)acrylate, and the (polyoxyethylene stearyl ether) ester of (meth) acrylic acid, the resultant (meth) acrylic acid-based copolymer tends to be low in Viscosity A and low in Viscosity B. When the amount of (polyoxyethylene stearyl ether) ester of (meth)acrylic acid contained in the monomer mixture is made high, the resultant (meth)acrylic acid-based copolymer tends to be high in Viscosity A and high in Viscosity B.

When the amount of the polymerization initiator used in the polymerization reaction is made low, the resultant (meth)acrylic acid-based copolymer tends to be high in Viscosity A and high in Viscosity B. When the amount of the polymerization initiator is made high, the resultant (meth) acrylic acid-based copolymer tends to be low in Viscosity A and low in Viscosity B.

The (meth)acrylic acid-based copolymer according to the present invention is preferably in the form of an aqueous (meth)acrylic acid-based copolymer dispersion, in which the copolymer is in the state of being dispersed in water in light of a main use purpose of the copolymer.

The (meth)acrylic acid-based copolymer obtainable by an emulsion polymerization method can easily be obtained in the state of being dispersed in water.

The content by percentage (concentration) of the (meth)acrylic acid-based copolymer in the aqueous (meth)acrylic acid-based copolymer dispersion is preferably from 5 to 50 mass%, more preferably from 20 to 40 mass% from the viewpoint of operability for the production thereof, and costs for the transportation thereof.

The (meth)acrylic acid-based copolymer and the aqueous (meth) acrylic acid-based copolymer dispersion according to the present invention have a unique viscosity property to be usable as a thickener or the like for a shampoo, a body wash, cosmetics, hair gel, cream, liquid detergent, alcohol antiseptic solution, detergent for tableware, bath gel, shower gel, and others. Accordingly, the present invention also provides a water-soluble thickener or some other product that contains the (meth)acrylic acid-based copolymer or the aqueous (meth)acrylic acid-based copolymer dispersion according to the present invention.

The thickener or the like, obtainable by the use of the (meth)acrylic acid-based copolymer or the aqueous (meth) acrylic acid-based copolymer dispersion according to the present invention, can give a high thickening effect in a small amount to an aqueous neutral solution by a unique viscosity property thereof in the presence of a surfactant. Thus, it is usable as a thickener or the like for a shampoo, a body wash, detergent for tableware, bath gel, shower gel, and others.

Hereinafter, the present invention will be specifically described by way of working examples. However, the present invention is never limited by these examples.

### [Example 1]

Into an air-tightly stoppable beaker, 100 mL in volume, equipped with a stirrer were charged 25 g of ethyl acrylate (manufactured by Tokyo Chemical Industry Co., Ltd.), 17 g of methacrylic acid (manufactured by Tokyo Chemical Industry Co. , Ltd.), and 0.7 g of a (polyoxyethylene (30) stearyl ether) ester of methacrylic acid (compound wherein R is a methyl group and n is 30 in the general formula (I) ; trade name: BLEMMER PSE1300, manufactured by NOF Corporation). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 100 g of pure water, 0.6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen. Thereafter, the temperature of the solution was raised to 75°C.

The entire amount of the monomer mixture was put into the dropping funnel. While the solution was kept at a temperature of 75°C, the entire amount of the monomer mixture was continuously dropped over 1 hour. After the end of the dropping, thereto was added 0.02 g of ammonium persulfate (manufactured by Tokyo Chemical Industry Co., Ltd.). While the solution was kept at a temperature of 80°C, the reactive components were then caused to react with each other for 1.5 hours.

After the end of the reaction, the reactor was cooled to 25°C to yield emulsion 1 in which a (meth)acrylic acid-based copolymer was dispersed in water. The concentration of the (meth)acrylic acid-based copolymer in emulsion 1 was 29.4 mass%.

### [Example 2]

Into an air-tightly stoppable beaker, 100 mL in volume, equipped with a stirrer were charged 25 g of ethyl acrylate (manufactured by Tokyo Chemical Industry Co., Ltd.), 17 g of methacrylic acid (manufactured by Tokyo Chemical Industry Co., Ltd.), and 2.2 g of a (polyoxyethylene (30) stearyl ether) ester of methacrylic acid (compound wherein R is a methyl group and n is 30 in the general formula (I) ; trade name: BLEMMER PSE1300, manufactured by NOF Corporation). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 100 g of pure water, 0.6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen. Thereafter, the temperature of the solution was raised to 75°C.

The entire amount of the monomer mixture was put into the dropping funnel. While the solution was kept at a temperature of 75°C, the entire amount of the monomer mixture was continuously dropped over 1 hour. After the end of the dropping, thereto was added 0. 02 g of ammonium persulfate (manufactured by Tokyo Chemical Industry Co., Ltd.). While the solution was kept at a temperature of 80°C, the reactive components were then caused to react with each other for 1.5 hours.

After the end of the reaction, the reactor was cooled to 25°C to yield emulsion 2 in which a (meth)acrylic acid-based copolymer was dispersed in water. The concentration of the (meth)acrylic acid-based copolymer in emulsion 2 was 30.8 mass%.

### [Example 3]

Into an air-tightly stoppable beaker, 100 mL in volume, equipped with a stirrer were charged 25 g of ethyl acrylate (manufactured by Tokyo Chemical Industry Co., Ltd.), 17 g of methacrylic acid (manufactured by Tokyo Chemical Industry Co., Ltd.), and 3. 6 g of a (polyoxyethylene (30) stearyl ether) ester of methacrylic acid (compound wherein R is a methyl group and n is 30 in the general formula (I); trade name: BLEMMER PSE1300, manufactured by NOF Corporation). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 100 g of pure water, 0.6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen.
Thereafter, the temperature of the solution was raised to 75°C.

The entire amount of the monomer mixture was put into the dropping funnel. While the solution was kept at a temperature of 75°C, the entire amount of the monomer mixture was continuously dropped over 1 hour. After the end of the dropping, thereto was added 0.02 g of ammonium persulfate (manufactured by Tokyo Chemical Industry Co., Ltd.). While the solution was kept at a temperature of 80°C, the reactive components were then caused to react with each other for 1.5 hours.

After the end of the reaction, the reactor was cooled to 25°C to yield emulsion 3 in which a (meth)acrylic acid-based copolymer was dispersed in water. The concentration of the (meth)acrylic acid-based copolymer in emulsion 3 was 31.1 mass%.

### [Example 4]

Into an air-tightly stoppable beaker, 100 mL in volume, equipped with a stirrer were charged 25 g of ethyl acrylate (manufactured by Tokyo Chemical Industry Co., Ltd.), 17 g of methacrylic acid (manufactured by Tokyo Chemical Industry Co., Ltd.), and 5.1 g of a (polyoxyethylene (30) stearyl ether) ester of methacrylic acid (compound wherein R is a methyl group and n is 30 in the general formula (I); trade name: BLEMMER PSE1300, manufactured by NOF Corporation). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 100 g of pure water, 0.6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen. Thereafter, the temperature of the solution was raised to 75°C.

The entire amount of the monomer mixture was put into the dropping funnel. While the solution was kept at a temperature of 75°C, the entire amount of the monomer mixture was continuously dropped over 1 hour. After the end of the dropping, thereto was added 0. 02 g of ammonium persulfate (manufactured by Tokyo Chemical Industry Co., Ltd.). While the solution was kept at a temperature of 80°C, the reactive components were then caused to react with each other for 1.5 hours.

After the end of the reaction, the reactor was cooled to 25°C to yield emulsion 4 in which a (meth)acrylic acid-based copolymer was dispersed in water. The concentration of the (meth)acrylic acid-based copolymer in emulsion 4 was 31.6 mass%.

### [Example 5]

Into an air-tightly stoppable beaker, 100 mL in volume, equipped with a stirrer were charged 25 g of ethyl acrylate (manufactured by Tokyo Chemical Industry Co., Ltd.), 17 g of methacrylic acid (manufactured by Tokyo Chemical Industry Co., Ltd.), and 7. 3 g of a (polyoxyethylene (30) stearyl ether) ester of methacrylic acid (compound wherein R is a methyl group and n is 30 in the general formula (I); trade name: BLEMMER PSE1300, manufactured by NOF Corporation). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 100 g of pure water, 0.6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen. Thereafter, the temperature of the solution was raised to 75°C.

The entire amount of the monomer mixture was put into the dropping funnel. While the solution was kept at a temperature of 75°C, the entire amount of the monomer mixture was continuously dropped over 1 hour. After the end of the dropping, thereto was added 0.02 g of ammonium persulfate (manufactured by Tokyo Chemical Industry Co., Ltd.). While the solution was kept at a temperature of 80°C, the reactive components were then caused to react with each other for 1.5 hours.

After the end of the reaction, the reactor was cooled to 25°C to yield emulsion 5 in which a (meth)acrylic acid-based copolymer was dispersed in water. The concentration of the (meth)acrylic acid-based copolymer in emulsion 5 was 32.6 mass%.

### [Example 6]

Into an air-tightly stoppable beaker, 100 mL in volume, equipped with a stirrer were charged 25 g of ethyl acrylate (manufactured by Tokyo Chemical Industry Co., Ltd.), 17 g of methacrylic acid (manufactured by Tokyo Chemical Industry Co., Ltd.), and 10.9 g of a (polyoxyethylene (30) stearyl ether) ester of methacrylic acid (compound wherein R is a methyl group and n is 30 in the general formula (I); trade name: BLEMMER PSE1300, manufactured by NOF Corporation). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 100 g of pure water, 0.6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen. Thereafter, the temperature of the solution was raised to 75°C.

The entire amount of the monomer mixture was put into the dropping funnel. While the solution was kept at a temperature of 75°C, the entire amount of the monomer mixture was continuously dropped over 1 hour. After the end of the dropping, thereto was added 0.02 g of ammonium persulfate (manufactured by Tokyo Chemical Industry Co., Ltd.). While the solution was kept at a temperature of 80°C, the reactive components were then caused to react with each other for 1.5 hours.

After the end of the reaction, the reactor was cooled to 25°C to yield emulsion 6 in which a (meth)acrylic acid-based copolymer was dispersed in water. The concentration of the (meth)acrylic acid-based copolymer in emulsion 6 was 33.9 mass%.

### [Example 7]

Into an air-tightly stoppable beaker, 100 mL in volume, equipped with a stirrer were charged 25 g of ethyl acrylate (manufactured by Tokyo Chemical Industry Co., Ltd.), 17 g of methacrylic acid (manufactured by Tokyo Chemical Industry Co., Ltd.), and 1. 6 g of a (polyoxyethylene (9) stearyl ether) ester of methacrylic acid (compound wherein R is a methyl group and n is 9 in the general formula (I); trade name: BLEMMER PSE 400, manufactured by NOF Corporation). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 100 g of pure water, 0. 6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen. Thereafter, the temperature of the solution was raised to 75°C.

The entire amount of the monomer mixture was put into the dropping funnel. While the solution was kept at a temperature of 75°C, the entire amount of the monomer mixture was continuously dropped over 1 hour. After the end of the dropping, thereto was added 0.02 g of ammonium persulfate (manufactured by Tokyo Chemical Industry Co., Ltd.). While the solution was kept at a temperature of 80°C, the reactive components were then caused to react with each other for 1.5 hours.

After the end of the reaction, the reactor was cooled to 25°C to yield emulsion 7 in which a (meth)acrylic acid-based copolymer was dispersed in water. The concentration of the (meth)acrylic acid-based copolymer in emulsion 7 was 30.0 mass%.

### [Example 8]

Into an air-tightly stoppable beaker, 100 mL in volume, equipped with a stirrer were charged 25 g of ethyl acrylate (manufactured by Tokyo Chemical Industry Co., Ltd.), 17 g of methacrylic acid (manufactured by Tokyo Chemical Industry Co., Ltd.), and 3. 6 g of a (polyoxyethylene (9) stearyl ether) ester of methacrylic acid (compound wherein R is a methyl group and n is 9 in the general formula (I); trade name: BLEMMER PSE 400, manufactured by NOF Corporation). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 100 g of pure water, 0.6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen. Thereafter, the temperature of the solution was raised to 75°C.

The entire amount of the monomer mixture was put into the dropping funnel. While the solution was kept at a temperature of 75°C, the entire amount of the monomer mixture was continuously dropped over 1 hour. After the end of the dropping, thereto was added 0.02 g of ammonium persulfate (manufactured by Tokyo Chemical Industry Co., Ltd.). While the solution was kept at a temperature of 80°C, the reactive components were then caused to react with each other for 1.5 hours.

After the end of the reaction, the reactor was cooled to 25°C to yield emulsion 8 in which a (meth)acrylic acid-based copolymer was dispersed in water. The concentration of the (meth)acrylic acid-based copolymer in emulsion 8 was 30.5 mass%.

### [Comparative Example 1]

Into an air-tightly stoppable beaker, 100 mL in volume, equipped with a stirrer were charged 25 g of ethyl acrylate (manufactured by Tokyo Chemical Industry Co., Ltd.), and 17 g of methacrylic acid (manufactured by Tokyo Chemical Industry Co., Ltd.). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 100 g of pure water, 0.6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen. Thereafter, the temperature of the solution was raised to 75°C.

The entire amount of the monomer mixture was put into the dropping funnel. While the solution was kept at a temperature of 75°C, the entire amount of the monomer mixture was continuously dropped over 1 hour. After the end of the dropping, thereto was added 0.02 g of ammonium persulfate (manufactured by Tokyo Chemical Industry Co., Ltd.). While the solution was kept at a temperature of 80°C, the reactive components were then caused to react with each other for 1.5 hours.

After the end of the reaction, the reactor was cooled to 25°C to yield emulsion 9 in which a (meth)acrylic acid-based copolymer was dispersed in water. The concentration of the (meth)acrylic acid-based copolymer in emulsion 9 was 29.6 mass%.

### [Comparative Example 2]

Into an air-tightly stoppable beaker, 100 mL in volume, equipped with a stirrer were charged 25 g of ethyl acrylate (manufactured by Tokyo Chemical Industry Co. , Ltd.), 15.2 g of methacrylic acid (manufactured by Tokyo Chemical Industry Co. , Ltd.), and 7.2 g of ethoxylated behenyl methacrylate (trade name: SIPOMER BEM, manufactured by Rhodia Co.; proportions in composition = [CH₂=CCH₃C(O)-(OCH₂CH₂)₂₅-OC₂₂H₄₅] : 50 mass%, methacrylic acid: 25 mass%, and water: 25 mass%). This reaction system was stirred at 25°C for 30 minutes to yield a monomer mixture.

Separately from the above, into a separable flask (reactor), 300 mL in volume, equipped with a stirrer, a nitrogen introducing pipe, a dropping funnel, a thermometer and a condenser were charged 98 g of pure water, 0. 6 g of sodium lauryl sulfate (manufactured by Wako Pure Chemical Industries, Ltd.), and 0.06 g of ammonium persulfate (manufactured by Tokyo Chemical Industry Co., Ltd.). These components were stirred into a homogeneous state, and mixed with each other. Next, nitrogen gas was introduced into the solution in order to remove oxygen present in the upper space of the reactor, the raw materials and the solvent. In this way, the inside of the reactor was replaced into the atmosphere of nitrogen. Thereafter, the temperature of the solution was raised to 85°C.

The entire amount of the monomer mixture was put into the dropping funnel. While the solution was kept at a temperature of 85°C, the entire amount of the monomer mixture was continuously dropped over 1 hour. After the end of the dropping, thereto was added 0. 02 g of ammonium persulfate (manufactured by Tokyo Chemical Industry Co., Ltd.). While the solution was kept at a temperature of 90°C, the reactive components were then caused to react with each other for 1.5 hours.

After the end of the reaction, the reactor was cooled to 25°C to yield emulsion 10 in which a (meth)acrylic acid-based copolymer was dispersed in water. The concentration of the (meth)acrylic acid-based copolymer in emulsion 10 was 31.1 mass%.

### [Evaluations]

(1) Viscosity (Viscosity A) of an aqueous solution containing 1 mass% of each of the (meth) acrylic acid-based copolymers when this solution was adjusted into a pH of 7.5 with a 6 mass%-aqueous solution of sodium hydroxide:
   Ion exchange water was charged into a beaker, 200 mL in volume, equipped with a stirrer. Thereto was dropwise added the emulsion obtained in each of the working examples and the comparative examples, in which the respective (meth)acrylic acid-based copolymers were dispersed in water, to adjust the concentration of the (meth)acrylic acid-based copolymer into 1 mass%. Thereafter, the resultant was stirred for 5 minutes to be made into a homogenous solution. Next, a 6 mass%-aqueous solution of sodium hydroxide was added thereto to adjust the homogenous solution into a pH of 7. 5. In this way, a measuring sample was prepared. Respective outlines of the preparation of the measuring samples are shown in Table 1.

**[Table 1]**

| | Emulsion | | | Ion exchange water | 6 mass%-aqueous solution of sodium hydroxide |
|---|---|---|---|---|---|
| | No. | Concentration [mass%] | Added amount [g] | Added amount [g] | Added amount [g] |
| Example 1 | 1 | 29.4 | 6.8 | 193.2 | 5.2 |
| Example 2 | 2 | 30.8 | 6.5 | 193.5 | 5.2 |
| Example 3 | 3 | 31.1 | 6.4 | 193.6 | 4.8 |
| Example 4 | 4 | 31.6 | 6.3 | 193.7 | 4.8 |
| Example 5 | 5 | 32.6 | 6.1 | 193.9 | 4.5 |
| Example 6 | 6 | 33.9 | 5.9 | 194.1 | 4.0 |
| Example 7 | 7 | 30.0 | 6.7 | 193.3 | 6.7 |
| Example 8 | 8 | 30.5 | 6.6 | 193.4 | 5.1 |
| Comparative Example 1 | 9 | 29.6 | 6.8 | 193.2 | 5.5 |
| Comparative Example 2 | 10 | 31.1 | 6.4 | 193.6 | 4.8 |

Each of the measuring samples was allowed to stand still in a thermostat set to a temperature of 25°C for 2 hours, and then the viscosity of the measuring sample was measured at the same temperature, using a BH type rotary viscometer (VISMETRON VS-H1, manufactured by Shibaura System Co., Ltd.; rotation number: 20 rpm). The evaluation results are shown in Table 3.
(2) Viscosity (Viscosity B) of a solution containing 1 mass% of each of the (meth) acrylic acid-based copolymers and 5. 3 mass% of sodium polyoxyethylene (2) lauryl sulfate at 25°C when this solution was adjusted into a pH of 7 to 7.5 with a 6 mass% of sodium hydroxide:
   Ion exchange water and a product with a trade name of SINOLIN SPE 1200K (containing 26.5 mass% of sodium polyoxyethylene (2) lauryl sulfate) manufactured by New Japan Chemical Co. , Ltd. were charged into a beaker, 200 mL in volume, equipped with a stirrer. Thereto was dropwise added the emulsion obtained in each of the working examples and the comparative examples, in which the respective (meth)acrylic acid-based copolymers were dispersed in water. The resultant was then stirred for 5 minutes to be made into a homogenous solution. Next, a 6 mass%-aqueous solution of sodium hydroxide was added thereto to adjust the homogenous solution into a pH of 7 to 7. 5. In this way, a measuring sample was prepared which contained 1 mass% of the (meth)acrylic acid-based copolymer. Respective outlines of the preparation of the measuring samples are shown in Table 2.

**[Table 2]**

| | Emulsion | | | Ion exchange water | SINOLIN SPE 1200K | 6 mass%-aqueous solution of sodium hydroxide |
|---|---|---|---|---|---|---|
| | No. | Concentration [mass%] | Added amount [g] | Added amount [g] | Added amount [g] | Added amount [g] |
| Example 1 | 1 | 29.4 | 3.4 | 74.7 | 20 | 1.9 |
| Example 2 | 2 | 30.8 | 3.2 | 74.9 | 20 | 1.9 |
| Example 3 | 3 | 31.1 | 3.2 | 74.9 | 20 | 1.9 |
| Example 4 | 4 | 31.6 | 3.2 | 74.9 | 20 | 1.9 |
| Example 5 | 5 | 32.6 | 3.1 | 75.0 | 20 | 1.9 |
| Example 6 | 6 | 33.9 | 2.9 | 75.2 | 20 | 1.9 |
| Example 7 | 7 | 30.0 | 3.3 | 74.8 | 20 | 1.9 |
| Example 8 | 8 | 30.5 | 3.3 | 74.8 | 20 | 1.9 |
| Comparative Example 1 | 9 | 29.6 | 3.4 | 74.7 | 20 | 1.9 |
| Comparative Example 2 | 10 | 31.1 | 3.2 | 74.9 | 20 | 1.9 |

Each of the measuring samples was allowed to stand still in a thermostat set to a temperature of 25°C for 2 hours, and then the viscosity of the measuring sample was measured at the same temperature, using a BH type rotary viscometer (VISMETRON VS-H1, manufactured by Shibaura System Co., Ltd.; rotation number: 20 rpm). The evaluation results are shown in Table 3.

**[Table 3]**

| | Viscosity A | Viscosity B | Viscosity reduction proportion |
|---|---|---|---|
| | [mPa·s] | [mPa·s] | [%] |
| Example 1 | 1,800 | 800 | 55.6 |
| Example 2 | 15,000 | 4,600 | 69.3 |
| Example 3 | 26,000 | 7,900 | 69.6 |
| Example 4 | 32,000 | 10,000 | 68.8 |
| Example 5 | 41,000 | 17,000 | 58.5 |
| Example 6 | 40,000 | 18,000 | 55.0 |
| Example 7 | 3,500 | 2,000 | 42.9 |
| Example 8 | 8,500 | 3,000 | 64.7 |
| Comparative Example 1 | 240 | 40 | 83.3 |
| Comparative Example 2 | 65,000 | 1,100 | 98.3 |

From Table 3, it is understood that the (meth)acrylic acid-based copolymer of Comparative Example 1, in which no (polyoxyethylene stearyl ether) ester of methacrylic acid was copolymerized, was low in viscosity. It is understood that the (meth)acrylic acid-based copolymer of Comparative Example 2, in which a hydrophobic monomer other than any (polyoxyethylene stearyl ether) ester of methacrylic acid was copolymerized, was lower in viscosity (Viscosity B) than Example 3, in which a hydrophobic monomer was added in the same amount, when these copolymers were made into an aqueous solution containing sodium polyoxyethylene (2) lauryl sulfate. It is also understood that the viscosity reduction proportion was also higher.
(3) Viscosity (viscosity C) of a solution containing 4 mass% of a (meth) acrylic acid-based copolymer and 5.3 mass% of sodium polyoxyethylene (2) lauryl sulfate at 25°C when this solution was adjusted into a pH of 7 to 7.5 with a 6 mass% of sodium hydroxide:
   Ion exchange water and a product with a trade name of SINOLIN SPE 1200K (containing 26.5 mass% of sodium polyoxyethylene (2) lauryl sulfate) manufactured by New Japan Chemical Co. , Ltd. were charged into a beaker, 200 mL in volume, equipped with a stirrer. Thereto was dropwise added the emulsion obtained in Comparative Example 1, in which the (meth)acrylic acid-based copolymer was dispersed in water. The resultant was then stirred for 5 minutes to be made into a homogenous solution. Next, a 6 mass%-aqueous solution of sodium hydroxide was added thereto to adjust the homogenous solution into a pH of 7 to 7. 5. In this way, a measuring sample was prepared which contained 4 mass% of the (meth)acrylic acid-based copolymer. Respective outlines of the preparation of the measuring samples are shown in Table 4.

**[Table 4]**

| | Emulsion | | | Ion exchange water | SINOLIN SPE 1200K | 6 mass%-aqueous solution of sodium hydroxide |
|---|---|---|---|---|---|---|
| | No. | Concentration [mass%] | Added amount | Added amount [g] | Added amount [g] | Added amount [g] |
| Comparative Example 1 | 9 | 29.6 | 13.5 | 58.8 | 20 | 7.7 |
| Example 4 | 4 | 31.6 | 3.2 | 74.9 | 20 | 1.9 |

Each of the measuring samples was allowed to stand still in a thermostat set to a temperature of 25°C for 2 hours, and then the viscosity of the measuring sample was measured at the same temperature, using a BH type rotary viscometer (VISMETRON VS-H1, manufactured by Shibaura System Co., Ltd.; rotation number: 20 rpm). The evaluation results are shown in Table 5.

**[Table 5]**

| | Viscosity C |
|---|---|
| | [mPa·s] |
| Comparative Example 1 | 10,000 |
| Example 4 | 10,000 |

About Example 4, the value of Viscosity B is shown.

From Table 5, it has been understood that about the (meth)acrylic acid-based copolymer of Comparative Example 1, in which no (polyoxyethylene stearyl ether) ester of methacrylic acid was copolymerized, it was necessary for adjusting the viscosity thereof into 10, 000 mPa·s by preparing this copolymer into an aqueous solution also containing sodium polyoxyethylene (2) lauryl sulfate that the concentration of this aqueous solution was as large as 4 mass%. In other words, the (meth) acrylic acid-based copolymer according to the present invention can be prepared into an aqueous solution having an appropriately high viscosity by using this copolymer in a small amount.

## Claims

1. A (meth)acrylic acid-based copolymer obtainable by polymerizing (meth) acrylic acid, an alkyl (meth)acrylate with an alkyl group having 1 to 4 carbon atoms, and a (polyoxyethylene stearyl ether) ester of (meth) acrylic acid that is represented by the following general formula (I):
[Chem. 1]
CH₂=CRC(O)-(OCH₂CH₂)ₙ-OC₁₈H₃₇ (I)
wherein R represents a hydrogen atom or a methyl group, and n is an integer of 2 to 60,
in which an aqueous solution containing 1 mass% of the (meth) acrylic acid-based copolymer has a viscosity of 1, 000 to 100,000 mPa·s at 25°C when this solution is adjusted into a pH of 7.5 with a 6 mass%-aqueous solution of sodium hydroxide, and
in which an aqueous solution containing 1 mass% of the (meth)acrylic acid-based copolymer and 5.3 mass% of sodium polyoxyethylene (2) lauryl sulfate has a viscosity of 500 to 50,000 mPa·s at 25°C when this solution is adjusted into a pH of 7 to 7.5 with a 6 mass% of sodium hydroxide.

2. The (meth) acrylic acid-based copolymer according to claim 1, wherein n in the general formula (I) of the (polyoxyethylene stearyl ether) ester of (meth)acrylic acid is from 20 to 40.

3. The (meth) acrylic acid-based copolymer according to claim 1 or 2, wherein the alkyl (meth)acrylate with an alkyl group having 1 to 4 carbon atoms, is ethyl (meth)acrylate.

4. The (meth)acrylic acid-based copolymer according to any one of claims 1 to 3, wherein the used amount of the (polyoxyethylene stearyl ether) ester of (meth) acrylic acid is from 2 to 26 parts by mass for 100 parts by mass of the total of (meth) acrylic acid and the alkyl (meth) acrylate with an alkyl group having 1 to 4 carbon atoms.

5. The (meth)acrylic acid-based copolymer according to any one of claims 1 to 4, wherein the used amount of the alkyl (meth)acrylate with an alkyl group having 1 to 4 carbon atoms, is from 70 to 900 parts by mass for 100 parts by mass of (meth)acrylic acid.

6. An aqueous (meth)acrylic acid-based copolymer dispersion, wherein the (meth) acrylic acid-based copolymer according to any one of claims 1 to 5 is dispersed in water.
